# EUROPÄISCHE PATENTSCHRIFT

(11) **EP 2 041 192 B1**
(45) Veröffentlichungstag und Bekanntmachung des Hinweises auf die Patenterteilung: **22.11.2017**
(21) Anmeldenummer: 07764875.6
(22) Anmeldetag: 27.06.2007
(51) Int. Cl.: C08F 8/48, C08F 8/00

(54) **ANHYDRITISIERTES COPOLYMER**
ANHYDRIZED COPOLYMER
COPOLYMÈRE À GROUPES ANHYDRIDE

(30) Priorität: 07.07.2006 DE 102006032225
(43) Veröffentlichungstag der Anmeldung: 01.04.2009
(73) Patentinhaber: BellandTechnology AG, 91278 Pottenstein (DE)
(72) Erfinder: LEDER, Herbert, 76547 Sinzheim (DE); RUGGIERI, Juan Carlos, 2543 Lengnau (CH)
(74) Vertreter: Patentanwälte Ruff, Wilhelm, Beier, Dauster & Partner mbB
(86) Internationale Anmeldenummer: PCT/EP2007/005664
(87) Internationale Veröffentlichungsnummer: WO 2008/003421

(56) Entgegenhaltungen:
- EP-A1- 0 306 133
- EP-A1- 1 602 688
- EP-A2- 0 468 375

## Beschreibung

Die Erfindung betrifft ein anhydritisiertes Copolymer, ein Verfahren zu seiner Herstellung sowie die Verwendung des erfindungsgemäßen Copolymers zur Herstellung von Gebrauchsgegenständen.

Polymere, wie Copolymere, insbesondere Terpolymere, auf der Basis von α-β ungesättigten Monocarbonsäuren und neutralen ungesättigten Vinylmonomeren, stellen wichtige Ausgangsmaterialien für die Herstellung einer Vielzahl von Gebrauchsgegenständen dar. Durch die Wahl der Ausgangsmonomere können die Eigenschaften, beispielsweise der Härtegrad, der Polymere und insbesondere die Eigenschaften der daraus herzustellenden Gebrauchsgegenstände gezielt beeinflußt werden. Entscheidend für die Herstellung von polymeren Gebrauchsgegenständen ist die thermische Beständigkeit der Polymere bei ihren Verarbeitungstemperaturen. Ein Beispiel für eine gut verarbeitbare Polymerkombination mit einem Polymer auf der Basis von α-β ungesättigten Monocarbonsäuren ist aus der EP 0 928 316 B1 bekannt. Häufig werfen Polymere jedoch bei ihren Verarbeitungstemperaturen erhebliche Probleme auf, die teilweise nur durch zusätzliche und insbesondere aufwendige Arbeitsschritte vermieden werden können. So führt insbesondere die Verarbeitung von Polymeren auf der Basis von Methacrylsäure häufig zu starker Rauch- und Gasentwicklung, wodurch beispielsweise die Exposition gegenüber schädlichen Stoffen am Arbeitsplatz erhöht wird. Grundsätzlich erschweren Verarbeitungsprobleme bei Polymeren die Einhaltung von Qualitätsstandards bei den daraus herzustellenden Produkten.

EP0306133 offenbart anhydritisierte Methacrylsäure-Methymethacrylat-Styrol Copolymere und deren Verwendung als Gebrauchsgegenständen. Die Erfindung stellt sich somit die Aufgabe, ein Copolymer bereitzustellen, welches die im Stand der Technik aufgeführten Nachteile vermeidet und insbesondere bei seiner Verarbeitungstemperatur ohne Schwierigkeiten handhabbar bzw. verarbeitbar ist.

Diese Aufgabe wird gelöst durch ein Copolymer mit Carboxylgruppen tragenden Monomereinheiten, insbesondere zur Herstellung von Gebrauchsgegenständen, wobei die Carboxylgruppen entlang einer Kohlenstoffkette des Copolymers vorliegen und mindestens teilweise jeweils mit einer Seitengruppe einer innerhalb der Kohlenstoffkette benachbarten Monomereinheit unter Ausbildung von intramolekularen Anhydridstrukturen verknüpft sind.
Die Verknüpfung zwischen den Carboxylgruppen und den Seitengruppen im Copolymer beruht vorzugsweise ausschließlich auf der Ausbildung von intramolekularen Anhydridstrukturen.

Durch die Erfindung wird ein Copolymer bereitgestellt, welches insbesondere bei seiner Verarbeitungstemperatur thermisch stabil ist und sich ohne Schwierigkeiten zu den gewünschten Gebrauchsgegenständen verarbeiten läßt. Dies wird erfindungsgemäß durch die Anwesenheit von intramolekularen Anhydridstrukturen im Copolymer erreicht, wodurch die umgesetzten Carboxylgruppen des Copolymers keine unerwünschten Nebenreaktionen mehr eingehen können. Die übrigen Carboxylgruppen liegen entweder isoliert oder sterisch abgeschirmt innerhalb der Kohlenstoffkette des Copolymers vor. Sie stehen daher ebenfalls nicht für Nebenreaktionen zur Verfügung. Auf diese Weise ist eine unkomplizierte und insbesondere risikoarme Verarbeitung des erfindungsgemäßen Copolymers möglich.

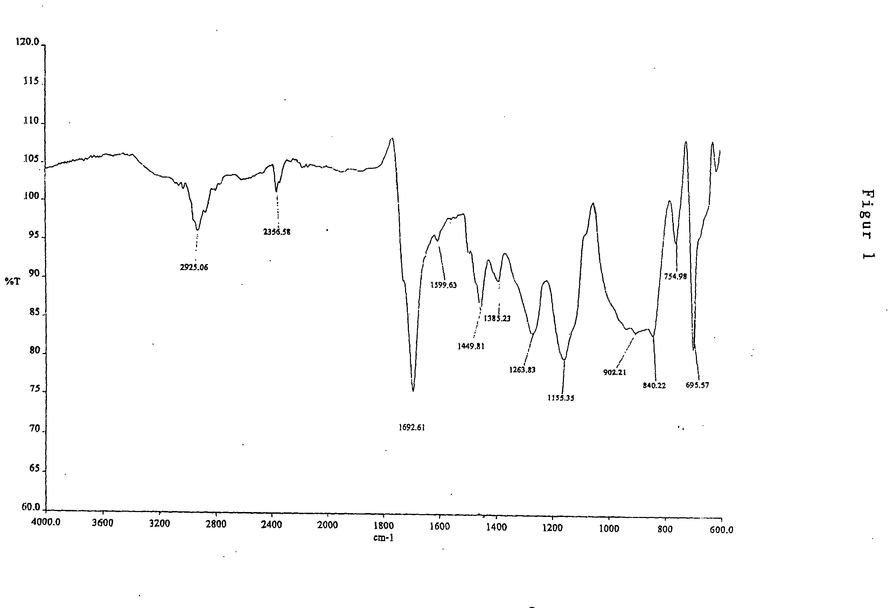

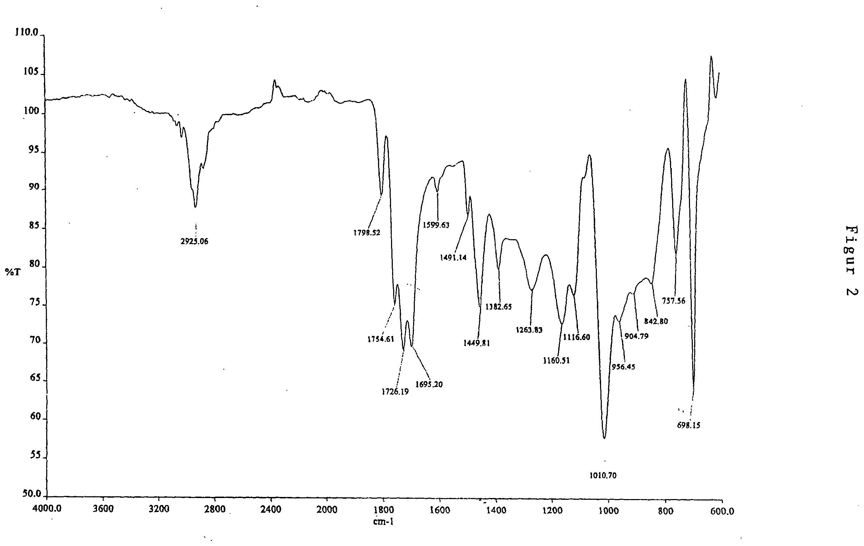

Die Anwesenheit von intramolekularen Anhydridstrukturen im erfindungsgemäßen Copolymer wurde von den Erfindern insbesondere anhand von gemessenen IR(Infrarot)-Spektren verifiziert (Figuren 1 und 2). Weiterhin konnte die Anwesenheit von intramolekularen Anhydridstrukturen anhand der Messung des Drehmoments durch den sogenannten Brabender-Langzeitversuch bestätigt werden, demzufolge das Drehmoment bei Mischungen aus anhydritisiertem Copolymer und reaktionsfähigen Komponenten nicht anstieg und das Copolymer im Übrigen löslich blieb. Demgegenüber steigt das Drehmoment durch die Ausbildung von intermolekularen Vernetzungsreaktionen zwischen nicht anhydritisiertem Copolymer und reaktionsfähigen Komponenten aufgrund der Entstehung von größeren Copolymer-Molekülen an. Infolgedessen verringert sich auch die Löslichkeit des vernetzten Copolymers in zunehmendem Maße.

Unter einem Copolymer im Sinne der vorliegenden Erfindung soll ein Terpolymer auf der Basis von Methacrylsäure, n-Butylacrylat und Styrol verstanden werden.

Unter Anhydritisierung soll im Sinne der vorliegenden Erfindung die reversible Ausbildung von intramolekularen Anhydridstrukturen im Copolymer verstanden werden.

Unter Carboxylgruppen tragenden Monomereinheiten im Sinne der vorliegenden Erfindung sollen Monomereinheiten innerhalb des Copolymers verstanden werden, welche außerhalb der Kohlenstoffkette des Polymers jeweils eine Carboxylgruppe bzw. Carboxylatgruppe oder eine maskierte Carboxylgruppe, insbesondere eine Estergruppe, aufweisen. Unter einer benachbarten Monomereinheit im Sinne der vorliegenden Erfindung soll eine Monomereinheit verstanden werden, deren Seitengruppe gegenüber Carboxylgruppen reaktiv ist. Bevorzugt handelt es sich bei den benachbarten Monomereinheiten um die im vorherigen Abschnitt eingeführten Carboxylgruppen tragenden Monomereinheiten.

Unter einem neutralen Vinylmonomer im Sinne der vorliegenden Erfindung soll ein Vinylmonomer verstanden werden, welches weder saure noch basische Gruppen, insbesondere keine Carboxylgruppen, trägt.

Die Seitengruppe der innerhalb der Copolymerkette benachbarten Monomereinheit kann eine Carboxylgruppe sein. Somit entstehen die intramolekularen Anhydridstrukturen des Copolymers jeweils durch eine Kondensationsreaktion zwischen zwei Carboxylgruppen. Als niedermolekulares Kondensationsprodukt wird Wasser gebildet, das ohne technischen Aufwand aus dem Reaktionsansatz entfernbar ist. Auf diese Weise läßt sich die Reaktion mit Vorteil zugunsten der intramolekularen Anhydridstrukturen im Copolymer verschieben.

Die Seitengruppe der innerhalb der Copolymerkette benachbarten Monomereinheit kann eine maskierte Carboxylgruppe sein, d.h. eine von der Carboxylgruppe abgeleitete Gruppe. Bei der maskierten Carboxylgruppe handelt es sich vorzugsweise um eine Estergruppe. Estergruppen sind als benachbarte Seitengruppen für die Ausbildung der intramolekularen Anhydridstrukturen im Copolymer besonders bevorzugt. Die durch Kondensationsreaktion entstehenden Alkohole stellen in organischen Reaktionen grundsätzlich gute Abgangsgruppen dar. Weiterhin sind niedermolekulare Alkohole, insbesondere n-Butanol, leicht, beispielsweise durch thermische Reaktionsführung, aus dem Reaktionsansatz entfernbar. Somit kann die Ausbildung der intramolekularen Anhydridstrukturen im Copolymer in besonders vorteilhafter Weise begünstigt werden.

Weiterhin können die maskierten Carboxylgruppen durch sogenannte Nachbargruppeneffekte auf unmaskierte, d.h. freie, Carboxylgruppen benachbarter Monomereinheiten übertragen werden. Dies geschieht beispielsweise durch einen nukleophilen Angriff einer unmaskierten Carboxylgruppe an einer maskierten Carboxylgruppe, wodurch die angreifende Carboxylgruppe selbst maskiert wird. Aus der ursprünglich maskierten Carboxylgruppe geht dagegen eine unmaskierte Carboxylgruppe hervor. Auf diese Weise ist eine Wanderung von Carboxylgruppen entlang der Copolymerkette möglich, ehe die Carboxylgruppen durch Bildung von intramolekularen Anhydridstrukturen verbraucht werden. Ebenso ist es möglich, dass die Carboxylgruppen nach ihrer Wanderung entlang der Kohlenstoffkette des Copolymers sterisch abgeschirmt oder isoliert sind und insbesondere für weitere Reaktionen nicht mehr zur Verfügung stehen.

In einer weitergehenden Ausführungsform des erfindungsgemäßen Copolymers liegen die Anhydridstrukturen in Form von Ringen, vorzugsweise in Form von sechsgliedrigen Ringen, vor. Die Anhydridstrukturen des erfindungsgemäßen Copolymers sind vorzugsweise Glutarsäureanhydridstrukturen. Die intramolekularen Anhydridstrukturen sind jeweils durch Reaktion zwischen der Carboxylgruppe einer Methacrylsäureeinheit und der Estergruppe einer n-Butylacrylateinheit gebildet. Erfindungsgemäß ist es insbesondere vorgesehen, dass das Copolymer frei von kovalenten Vernetzungen, insbesondere mit Schlagzähkomponenten und/oder Stabilisatoren, ist. Dies erleichtert in besonders vorteilhafter Weise die Wiedergewinnbarkeit des erfindungsgemäßen Copolymers.

In einer weiteren Ausführungsform des erfindungsgemäßen Copolymers beträgt der Gewichtsanteil an freien Carboxylgruppen (Carboxylgehalt) im anhydritisierten Copolymer mindestens 13 Gew.-%. Bevorzugt beträgt der Gewichtsanteil an freien Carboxylgruppen im anhydritisierten Copolymer 13 bis 50 Gew.-%, insbesondere 13 bis 25 Gew.-%, vorzugsweise 13 bis 20 Gew.-%. Die umgesetzten Carboxylgruppen sind durch die Anhydridbildung deaktiviert. Die übrigen Carboxylgruppen sind insbesondere aufgrund ihrer sterischen Abschirmung oder Isolation deaktiviert.

Das erfindungsgemäße Copolymer ist insbesondere amorph, vorzugsweise vollständig amorph.

In einer weiteren Ausführungsform weist das erfindungsgemäße Copolymer eine andere, vorzugsweise eine tiefere, Glasübergangstemperatur (T_{g}) auf, als vor der Ausbildung der intramolekularen Anhydridstrukturen. Das erfindungsgemäße Copolymer weist vorzugsweise eine Glasübergangstemperatur (T_{g}) im Bereich von 85 °C bis 155 °C, insbesondere im Bereich von 90 °C bis 150°C, auf.

In einer bevorzugten Ausführungsform der Erfindung ist das Copolymer bei Erhitzen auf Temperaturen oberhalb der Glasübergangstemperatur (T_{g}), insbesondere bei Erhitzen auf seine Verarbeitungstemperatur, frei von exothermen Veränderungen. Dies liegt mit besonderem Vorteil - wie bereits mehrfach erwähnt - daran, daß die Carboxylgruppen einerseits durch die Ausbildung von intramolekularen Anhydridstrukturen verbraucht und anderseits insbesondere durch sterische Abschirmung oder Isolation nicht mehr reaktiv sind. Auf diese Weise ist das erfindungsgemäße Copolymer thermisch außerordentlich stabil, wodurch eine deutlich verbesserte Handhabung und insbesondere Verarbeitung des Copolymers möglich ist.

Das erfindungsgemäße Copolymer ist ein Terpolymer auf der Basis von Methacrylsäure, n-Butylacrylat und Styrol.
In einer weitergehenden Ausführungsform besitzt das Copolymer einen Gewichtsanteil an Methacrylsäure im Copolymer von 20 bis 80 Gew.-%, insbesondere von 25 bis 70 Gew.-%, vorzugsweise von ca. 40 Gew.-%. Bevorzugt besitzt das erfindungsgemäße Copolymer einen Gewichtsanteil an n-Butylacrylat im Copolymer von 15 bis 70 Gew.-%, vorzugsweise von 20 bis 65 Gew.-%, insbesondere von 20 bis 40 Gew.-%. Weiterhin besitzt das erfindungsgemäße Copolymer insbesondere einen Gewichtsanteil an neutralem Vinylmonomer im Copolymer von 5 bis 60 Gew.-%, vorzugsweise von 10 Gew.-% bis 40 Gew.-%.
Das erfindungsgemäße Copolymer kann mit zahlreichen Zusätzen compoundiert werden, z.B. mit Polymeren, wie Polymethylmethacrylat, Weichmachern und Füllstoffen.
Das erfindungsgemäße Copolymer ist mit besonderem Vorteil mit mindestens einer Schlagzähkomponente und/oder mindestens einem Stabilisator compoundiert. Auf diese Weise können die Eigenschaften des Copolymers je nach Art der herzustellenden Gegenstände, insbesondere Gebrauchsgegenstände, gezielt gesteuert bzw. beeinflußt werden. Bei den Schlagzähkomponenten handelt es sich bevorzugt um polymere Verbindungen, insbesondere um sogenannte Core-Shell-Strukturen. Die Hülle (Shell) und insbesondere der Kern (Core) der Core-Shell-Strukturen können aus Polymeren, insbesondere aus Copolymeren, bestehen. So kann die Hülle aus einem Copolymer auf der Basis von Methacrylat und Styrol bestehen. Der Kern kann insbesondere aus Polybutadien oder einem Copolymer auf der Basis von Butadien, insbesondere auf der Basis von Butadien und Styrol, gebildet sein. Die Schlagzähkomponenten sind mit dem erfindungsgemäßen Copolymer vorzugsweise nur physikalisch vernetzt. Als Schlagzähkomponenten können auch solche verwendet werden, die Epoxy-Gruppen aufweisen, z.B. ein Terpolymer aus Ethylen, Acrylsäurebutylester und Glycidylmethacrylat.

Bei dem erfindungsgemäßen Copolymer, das vorzugsweise transparent und farblos ist, kann es sich insbesondere um ein Suspensions- oder Lösungspolymer handeln, wobei das Lösungspolymer für eine großtechnische Produktion bevorzugt ist. Weiterhin kann das erfindungsgemäße Copolymer ein Massepolymer sein. Erfindungsgemäß ist es ebenso möglich, dass es sich bei dem Copolymer um ein Dispersionspolymer handelt.

Das erfindungsgemäße Copolymer ist insbesondere in einem alkalischen Medium, vorzugsweise in wässrigem Alkali, lösbar. Die Löslichkeit des Copolymers beruht im Wesentlichen auf der Auflösung (Öffnung) der intramolekularen Anhydridstrukturen unter Salzbildung des Copolymers. Bevorzugt wird durch die Auflösung der Anhydridstrukturen die ursprüngliche Anzahl an Carboxylgruppen im Copolymer, d.h. die Anzahl der Carboxylgruppen vor der Anhydritisierung des Copolymers, erhalten.

Weiterhin ist das Copolymer, insbesondere ein Salz des Copolymers, ausfällbar. Bevorzugt ist das erfindungsgemäße Copolymer in einem sauren Medium, insbesondere in einer Mineralsäure, die vorzugsweise verdünnt ist, ausfällbar. Die Ausfällung des Copolymers beruht im Wesentlichen auf der Protonierung der bei der Salzbildung des Copolymers entstehenden Carboxylatgruppen zu Carboxylgruppen. Durch die Entstehung der Carboxylgruppen verliert das Copolymer seinen Salzcharakter und damit insbesondere seine Wasserlöslichkeit. Das Copolymer fällt aus.

In einer besonders bevorzugten Ausführungsform ist das erfindungsgemäße Copolymer nach Auflösung (Öffnung) der Anhydridstrukturen und Umwandlung der Carboxylatgruppen in Carboxylgruppen durch erneute Anhydritisierung regenerierbar (wiedergewinnbar bzw. recyclebar). Die Wiedergewinnbarkeit des erfindungsgemäßen Copolymers beruht im Wesentlichen auf der Reversibilität der Anhydritisierung des Copolymers. Die Anzahl der intramolekularen Anhydridstrukturen im regenerierten Copolymer entspricht insbesondere der Anzahl der intramolekularen Anhydridstrukturen im Copolymer im ursprünglichen anhydritisierten Zustand.

Die vorliegende Erfindung betrifft weiterhin ein Copolymer mit Carboxylgruppen tragenden Monomereinheiten, insbesondere zur Herstellung von Gebrauchsgegenständen, wobei das Copolymer durch mindestens eine Schlagzähkomponente und/oder mindestens einen Stabilisator, vorzugsweise durch mindestens eine Schlagzähkomponente, compoundiert ist und die Carboxylgruppen entlang einer Kohlenstoffkette des Copolymers vorliegen und mindestens teilweise jeweils mit einer Seitengruppe einer innerhalb der Kohlenstoffkette benachbarten Monomereinheit durch Ausbildung von intramolekularen, vorzugsweise ausschließlich intramolekularen, Anhydridstrukturen verknüpft sind. Bezüglich weiterer Merkmale hierzu wird vollumfänglich auf die vorliegende Beschreibung Bezug genommen.

Die vorliegende Erfindung betrifft außerdem ein Verfahren zur Herstellung eines Copolymers mit Anhydridgruppen an einer Kohlenstoffkette des Copolymers, wobei Carboxylgruppen entlang der Kohlenstoffkette eines thermoplastischen Copolymers mindestens teilweise jeweils mit einer Seitengruppe einer innerhalb der Kohlenstoffkette benachbarten Monomereinheit, wobei die Seitengruppe eine Carboxylgruppe oder eine davon abgeleitete Gruppe ist, durch trockenes Erhitzen intramolekular, vorzugsweise ausschließlich intramolekular, zu den Anhydridstrukturen umgesetzt werden, wobei das Copolymer ein Terpolymer auf der Basis von Methacrylsäure, n-Butylacrylat und Styrol ist. Die von der Carboxylgruppe abgeleitete Seitengruppe ist vorzugsweise eine Estergruppe.

In einer besonders bevorzugten Ausführungsform des erfindungsgemäßen Verfahrens wird die Umsetzung der Carboxylgruppen zu den intramolekularen Anhydridstrukturen in einem Extruder, vorzugsweise in einem Zwei-Schnecken-Extruder, durchgeführt. Die Umsetzung der Carboxylgruppen zu den Anhydridstrukturen kann insbesondere direkt nach der Copolymerisation durchgeführt werden.

In einer weiteren Ausführungsform des erfindungsgemäßen Verfahrens wird das Copolymer bei einer Temperatur zwischen 180 °C und 280°C, insbesondere zwischen 220 °C und 280°C, vorzugsweise zwischen 260 °C und 275 °C, insbesondere bei einer Temperatur von ca. 270 °C, erhitzt. Mit besonderem Vorteil wird das Copolymer während eines kurzen Zeitraums erhitzt.

Die Umsetzung der Carboxylgruppen wird zum Beispiel in einem Ofen bevorzugt während bis zu 120 Minuten, insbesondere während 60 bis 120 Minuten, durchgeführt. Im Extruder erfolgt die Anhydritisierung wesentlich schneller, z.B. innerhalb weniger Minuten, da hier eine schnelle und schonende Erhitzung und Umwälzung erfolgt.

In einer weitergehenden Ausführungsform kann das Copolymer nach der Anhydritisierung unmittelbar und vorzugsweise nach vorheriger Compoundierung zu den entsprechenden Gegenständen geformt werden, beispielsweise zu Folien, Strängen und Profilen, die insbesondere durch Tiefziehen und Verschweißen weiterverarbeitet werden können. Ebenso ist es erfindungsgemäß möglich, das Copolymer zunächst in Granulatform oder in Pulverform herzustellen und gegebenenfalls später in der gewünschten Weise, insbesondere thermoplastisch, weiterzuverarbeiten, beispielsweise durch Spritzguß oder Folienherstellung.

Das Copolymer wird vorzugsweise nach der Anhydritisierung compoundiert, insbesondere durch Zugabe mindestens einer Schlagzähkomponente und/oder mindestens eines Stabilisators.

In einer erfindungsgemäß besonders bevorzugten Ausführungsform des Verfahrens wird das Copolymer unter Entfernung von Compoundierungsmitteln wiedergewonnen, wobei die Wiedergewinnung folgende Schritte umfasst:
- Herstellen einer Lösung des Copolymers in einem alkalischen Medium unter Auflösung (Öffnung) der intramolekularen Anhydridstrukturen und Salzbildung des Copolymers,
- Abtrennen des gelösten Copolymers von den nicht gelösten Compoundierungsmitteln und von Verunreinigungen,
- Erniedrigen des pH-Werts der Lösung unter Ausfällung des Copolymers,
- Trockenes Erhitzen des ausgefällten Copolymers unter Rückbildung der intramolekularen Anhydridstrukturen.

Aus dem Copolymer hergestellte Produkte können zum Recyclen des Polymers vor dem Herstellen der Copolymerlösung zerkleinert, insbesondere gemahlen oder geschreddert, werden. Auf diese Weise kann das Herstellen der Copolymerlösung beschleunigt werden.

Die Lösung des Copolymers wird insbesondere in wässrigen Alkali, vorzugsweise in wässriger Natronlauge, hergestellt. Die Compoundierungsmittel, insbesondere die Schlagzähkomponenten, liegen in alkalischen Medien mit Vorteil in disperser, insbesondere in fein disperser Form, vor.

Das Abtrennen des gelösten Copolymers von den nicht gelösten Compoundierungsmitteln und den Verunreinigungen kann beispielsweise durch Filtration vorgenommen werden.

Der pH-Wert der von den nicht gelösten Compoundierungsmitteln und Verunreinigungen abgetrennten Copolymerlösung wird vorzugsweise durch Zugabe einer Säure, insbesondere einer mittelstarken Säure, erniedrigt. Bei der Säure handelt es sich vorteilhafter Weise um eine Mineralsäure, vorzugsweise um Phosphorsäure. Zur Ausfällung des Copolymers kann ein pH-Wert von < 6, insbesondere < 4,5, vorzugsweise von ca. 2,5, eingestellt werden. Das ausgefällte Copolymer kann durch zusätzliche Waschschritte, beispielsweise zur Entfernung von Salzresten, unter Verwendung von Waschflüssigkeiten, beispielsweise entionisiertem Wasser, weiter gereinigt werden.
Bezüglich weiterer Einzelheiten zum Wiedergewinnungsverfahren des Copolymers wird jeweils auf den Offenbarungsgehalt der EP 0 468 375 B1 und EP 0 553 683 B1 Bezug genommen.

Die Erfindung betrifft schließlich die Verwendung des Copolymers zur Herstellung von Gebrauchsgegenständen, insbesondere von Behältern, Geschirr, beispielsweise von Eßgeschirr, oder anderen Gegenständen. Bei den Gebrauchsgegenständen kann es sich insbesondere um Catering-Produkte, beispielsweise um Catering-Becher, handeln. Weiterhin eignet sich das erfindungsgemäße Copolymer zur Herstellung von Folien, insbesondere für Verpackungszwecke (Verpackungsfolien).

Das erfindungsgemäße Copolymer zeichnet sich in vorteilhafter Weise durch seine thermische Beständigkeit, insbesondere bei seiner Verarbeitungstemperatur, aus. Somit ist eine unkomplizierte und insbesondere risikoarme Verarbeitung des erfindungsgemäßen Copolymers zu den gewünschten Gebrauchsgegenständen möglich. Es sind beispielsweise keine zusätzlichen Arbeitsschritte oder Sicherheitsvorkehrungen, etwa wegen möglicher Rauch- oder Geruchsentwicklung bei Erhitzen des erfindungsgemäßen Copolymers auf seine Verarbeitungstemperatur, erforderlich. Weiterhin treten bei dem erfindungsgemäßen Copolymer keine unerwünschten Vernetzungsreaktionen mit zugesetzten Additiven, insbesondere mit Schlagzähkomponenten, auf. Auf diese Weise können Düsenablagerungen in den Verarbeitungsmaschinen, beispielsweise Extrudern, und insbesondere zusätzliche Reinigungsschritte vermieden werden.

Weitere Merkmale und Einzelheiten der Erfindung ergeben sich aus der nachfolgenden Beschreibung einer bevorzugten Ausführungsform in Form eines Beispiels in Verbindung mit den Figuren und Unteransprüchen. Hierbei können die einzelnen Merkmale jeweils für sich alleine oder zu mehreren in Kombination miteinander bei einer Ausführungsform verwirklicht sein.

In den Figuren ist folgendes gezeigt:
- Figur 1:: Infrarotspektrum eines nicht anhydritisierten Copolymers,
- Figur 2:: Infrarotspektrum eines anhydritisierten Copolymers,
- Figur 3:: DSC-Aufnahme (Differential Scanning Calorimetry-Aufnahme) eines nicht anhydritisierten Copolymers,
- Figur 4:: DSC-Aufnahme (Differential Scanning Calorimetry-Aufnahme) eines anhydritisierten Copolymers,
- Figur 5:: Verhalten des Drehmoments während der Verarbeitung eines Compounds aus anhydritisiertem Copolymer einerseits und nicht anhydritisiertem Copolymer andererseits,
- Figur 6:: Verhalten des Drehmoments während der Verarbeitung eines Compounds aus anhydritisiertem Copolymer einerseits und nicht anhydritisiertem Copolymer andererseits, wobei das Copolymer zuvor jeweils wiedergewonnen (recycelt) wurde.

### Figurenbeschreibung

Figur 1 zeigt das IR-Spektrum eines nicht anhydritisierten Copolymers auf der Basis von Methacrylsäure, n-Butylacrylat und Styrol. Das Spektrum zeigt eine deutliche Bande bei ca. 1693 cm⁻¹, bei der es sich um die Schwingungsbande der Acylgruppe der im Copolymer vorhanden Carboxylgruppen handelt.

Figur 2 zeigt das IR-Spektrum eines anhydritisierten Copolymers auf der Basis von Methacrylsäure, n-Butylacrylat und Styrol. Das Spektrum zeigt neben einer Schwingungsbande bei ca. 1695 cm⁻¹, die auf Acylgruppen der im Copolymer noch vorhandenen Carboxylgruppen zurückzuführen ist, deutliche Banden bei ca. 1726 cm⁻¹, 1755 cm⁻¹ und 1799 cm⁻¹, die auf die Anwesenheit von intramolekularen Anhydridstrukturen im Copolymer hinweisen.

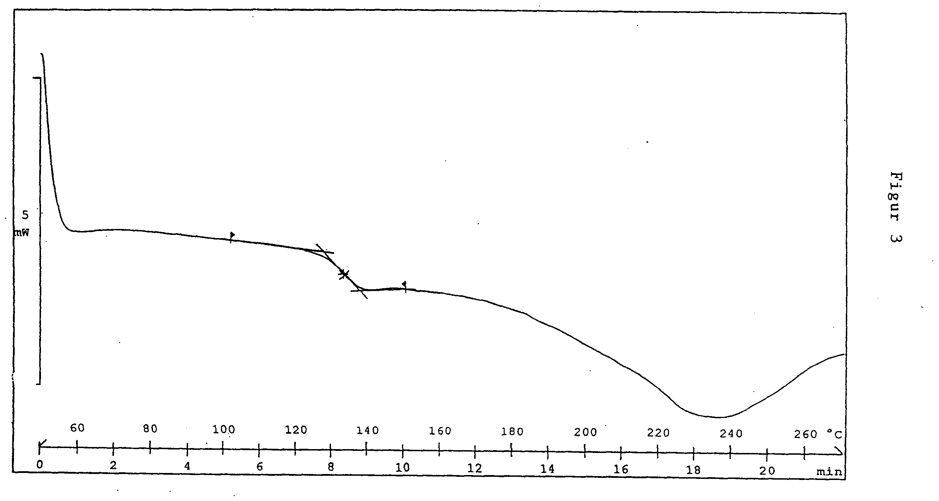

Figur 3 zeigt den DSC-Verlauf eines nicht anhydritisierten Copolymers auf der Basis von Methacrylsäure, n-Butylacrylat, und Styrol. Die DSC-Aufnahme zeigt zwei exotherme Veränderungen während der gesamten Messzeit an. Die erste exotherme Veränderung findet in einem Temperaturintervall zwischen ca. 127 °C und 137 °C statt und entspricht dem Glasübergangstemperaturintervall des Copolymers. Mit Hilfe der sogenannten Tangentialmethode lässt sich eine Glasübergangstemperatur (T_{G}) von ca. 133 °C bestimmen. Die zweite exotherme Veränderung findet in einem Temperaturbereich zwischen etwa 225 °C und 245 °C statt und ist auf die Ausbildung der intramolekularen Anhydridstrukturen im Copolymer zurückzuführen.

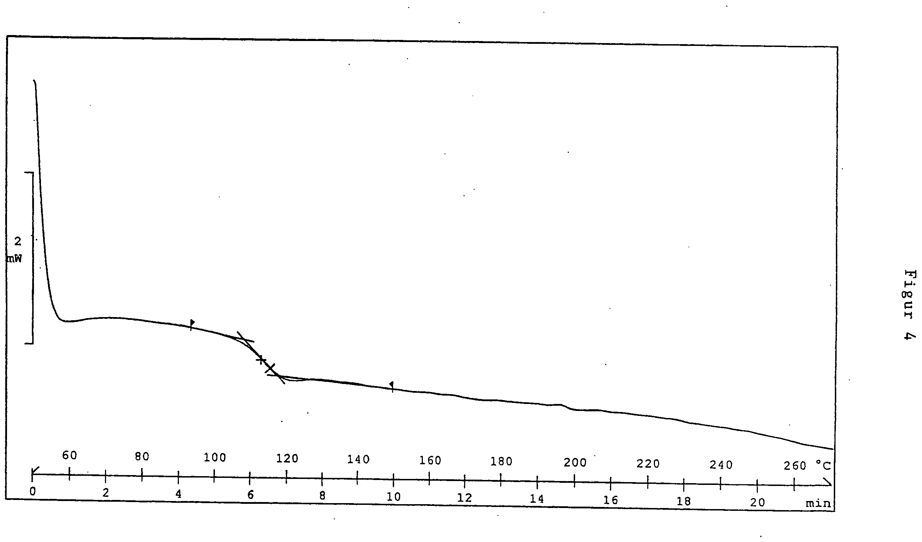

Figur 4 zeigt die DSC-Aufnahme eines anhydritisierten Copolymers auf der Basis von Methacrylsäure, n-Butylacrylat, und Styrol. Die DSC-Aufnahme zeigt lediglich eine exotherme Veränderung an, nämlich in einem Temperaturbereich zwischen etwa 107 °C und 117°C. Die in diesem Temperaturbereich aufgenommene exotherme Veränderung entspricht dem Glasübergangstemperaturintervall des Copolymers. Mit Hilfe der Tangentialmethode kann eine Glasübergangstemperatur von ca. 115 °C bestimmt werden.

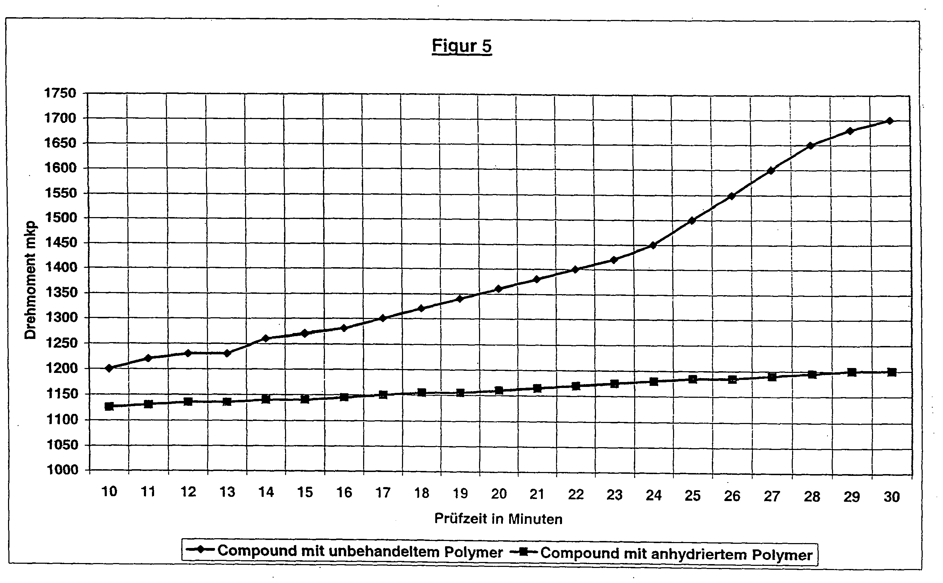

Figur 5 gibt das Verhalten des Drehmoments während einer Verarbeitung von compoundierten Copolymeren auf der Basis von Methacrylsäure, n-Butylacrylat und Styrol graphisch wieder. Als Compoundierungsmittel wurde eine Schlagzähkomponente verwendet, die mit freien Carboxylgruppen zu reagieren vermag. Das Copolymer wurde einmal in der anhydritisierten Form und einmal in der nicht anhydritisierten Form eingesetzt. Die Graphik zeigt, dass das Drehmoment des anhydritisierten Copolymers im Wesentlichen konstant bleibt. Dies bedeutet, dass das anhydritisierte Copolymer keine Reaktion mit dem reaktiven Compoundierungsmittel eingeht. Anderenfalls müsste das Drehmoment aufgrund der Entstehung größerer Copolymer-Moleküle (wegen intermolekularen Vernetzungen) ansteigen. Beim nicht anhydritisierten Polymer zeigt der Anstieg des Drehmoments dagegen eine Vernetzungsreaktion mit dem Compoundierungsmittel an.

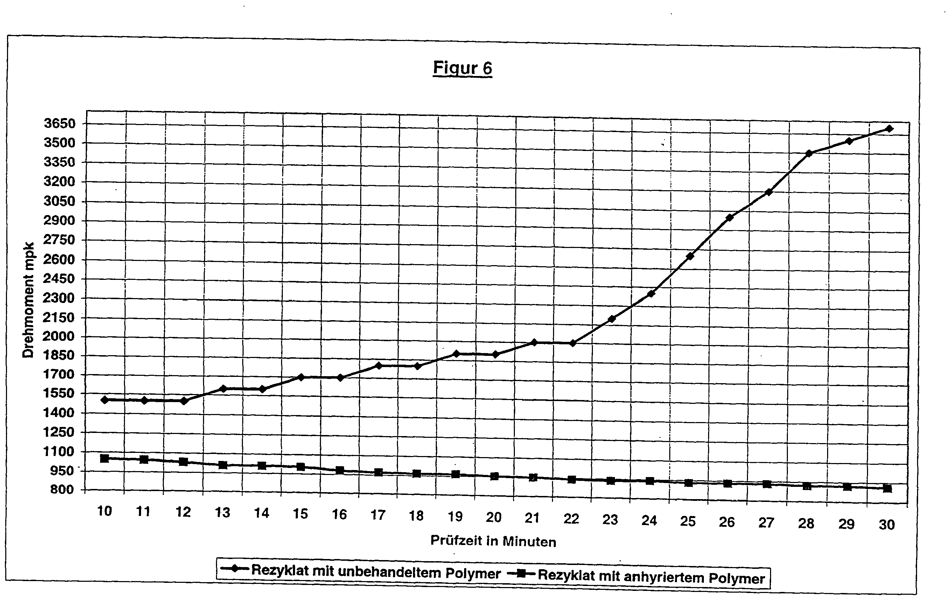

Figur 6 gibt das Verhalten des Drehmoments während der Verarbeitung des in Figur 5 beschriebenen Compounds aus anhydritisiertem Copolymer einerseits und nicht anhydritisiertem Copolymer andererseits graphisch wieder, wobei das Copolymer zuvor jeweils wiedergewonnen bzw. recycelt wurde. Die Graphik macht deutlich, dass die in Figur 5 beschriebene Kurvencharakteristik für das Verhalten des Drehmoments auch für den Fall gilt, dass das Compound aus einem wiedergewonnenen Copolymer hervorgeht. Bezüglich weiterer Einzelheiten wird daher insbesondere auf die Figurenbeschreibung 5 verwiesen.

### Beispiel 1: Herstellung eines Terpolymers auf der Basis von 50 Gew.-% Methacrylsäure, 40 Gew.-% n-Butylacrylat und 10 Gew.-% Styrol

Die Polymerisation der Monomere wird als Batch in einem Rührkesselreaktor mit Ethanol als Lösungsmittel (Gewichtsverhältnis Ethanol/Monomere 50/50) und in Gegenwart eines Peroxidinitiators bei einer Reaktionstemperatur von ca. 80°C durchgeführt. Die entstehende Polymerisationswärme wird über eine Rückflusskühlung des kondensierten Lösungsmittels abgeführt. Nach Beendigung der Polymerisation (ca. 7 Stunden) wird die Polymerlösung in einen Zwischenbehälter gepumpt und von diesem in einen Doppel-Schnecken-Extruder überführt. Im ersten Teil des Extruders werden 70% bis 95% des Lösungsmittels atmosphärisch abgedampft. Anschließend wird das Copolymer im Extruder auf ca. 270°C aufgeheizt. Das Copolymer durchläuft diese Temperaturstufe während weniger Minuten (1 bis 2 Minuten), während derer es anhydritisiert wird. Das restliche Lösungsmittel wird mit den abgespaltenen Reaktionsprodukten, insbesondere Butanol, Wasser, sowie mit Restmonomeren und Initiatorrückständen in einer nachgeschalteten Vakuumstation oder in zwei nachgeschalteten Vakuumstationen entfernt. Das fertige und anhydritisierte Terpolymer kann anschließend, z.B. mit einem Stabilisator und einer Schlagzähkomponente, compoundiert und dann granuliert werden. Die Compoundierung kann noch im ersten oder in einem zweiten Extruder durchgeführt werden.

Entsprechend Beispiel 1 kann ein Terpolymer auf der Basis von 40 Gew.-% Methacrylsäure, 25 Gew.-% n-Butylacrylat und 35 Gew.-% Styrol hergestellt werden, wobei zur Herstellung des Terpolymers ein Gewichtsverhältnis Ethanol/Monomere von 40/60 eingesetzt wird. Ebenso kann ein Copolymer auf der Basis von 40 Gew.-% n-Butylacrylat und 60 Gew.-% Methacrylsäure hergestellt werden. In letzterem Fall wird zur Herstellung des Copolymers ein Gewichtsverhältnis Ethanol/Monomere von 50/50 eingesetzt.

### Beispiel 2: Eigenschaften von Copolymeren vor und nach ihrer Anhydritisierung

Copolymer I: Terpolymers auf der Basis von 50 Gew.-% Methacrylsäure, 40 Gew.-% n-Butylacrylat und 10 Gew.-% Styrol
Copolymer II: Terpolymers auf der Basis von 40 Gew.-% Methacrylsäure, 25 Gew.-% n-Butylacrylat und 35 Gew.-% Styrol
Copolymer III: Copolymer auf der Basis von 40 Gew.-% n-Butylacrylat und 60 Gew.-% Methacrylsäure

Copolymer III ist ein Vergleichbeispiel.

| Copolymer | Carboxylgehalt (nicht anhydritisiert) [Gew.-%] | Carboxylgehalt (anhydritisiert) [Gew.-%] | TG (nicht anhydritisiert) [°C] | TG (anhydritisiert) [°C] |
|---|---|---|---|---|
| I | 23,8 | 13,8 | 137 | 100 |
| II | 20 | 14 | 137 | 112 |
| III | 28 | 17 | 123 | 122 |

Die in den Beispielen 1 und 2 angegebenen Werte in Gewichtsprozent [Gew.-%] für die Monomere und den Carboxylgehalt beziehen sich jeweils auf das Gesamtgewicht des jeweiligen Copolymers.

## Patentansprüche

1. Copolymer mit Carboxylgruppen tragenden Monomereinheiten, insbesondere zur Herstellung von Gebrauchsgegenständen, wobei die Carboxylgruppen entlang einer Kohlenstoffkette des Copolymers vorliegen und mindestens teilweise jeweils mit einer Seitengruppe einer innerhalb der Kohlenstoffkette benachbarten Monomereinheit unter Ausbildung von intramolekularen Anhydridstrukturen verknüpft sind, **dadurch gekennzeichnet, dass** das Copolymer ein Terpolymer auf der Basis von Methacrylsäure, n-Butylacrylat und Styrol ist.

2. Copolymer nach Anspruch 1, **dadurch gekennzeichnet, dass** die Anhydridstrukturen jeweils in Form von Ringen, vorzugsweise sechsgliedrigen Ringen, vorliegen.

3. Copolymer nach Anspruch 1 oder 2, **dadurch gekennzeichnet, dass** die Anhydridstrukturen jeweils eine Glutarsäureanhydridstruktur sind.

4. Copolymer nach einem der vorhergehenden Ansprüche, **dadurch gekennzeichnet, dass** die Anhydridstrukturen jeweils durch Reaktion zwischen der Carboxylgruppe einer Methacrylsäureinheit und der Estergruppe einer n-Butylacrylateinheit gebildet sind.

5. Copolymer nach einem der vorhergehenden Ansprüche, **dadurch gekennzeichnet, dass** der Gewichtsanteil an freien Carboxylgruppen im anhydritisierten Copolymer (Carboxylgehalt) 13 bis 50 Gew.-%, insbesondere 13 bis 25 Gew.-%, vorzugsweise 13 bis 20 Gew.-%, beträgt.

6. Copolymer nach einem der vorhergehenden Ansprüche, **dadurch gekennzeichnet, dass** das Copolymer eine andere, vorzugsweise eine tiefere, Glasübergangstemperatur (T_{g}) aufweist, als vor der Ausbildung der intramolekularen Anhydridstrukturen.

7. Copolymer nach einem der vorhergehenden Ansprüche, **dadurch gekennzeichnet, dass** das Copolymer eine Glasübergangstemperatur (T_{g}) im Bereich von 85 °C bis 155 °C, insbesondere im Bereich von 90 °C bis 150 °C, aufweist, wobei die Glasübergangstemperatur mit DSC gemessen wird.

8. Copolymer nach Anspruch 1, das mit mindestens einer Schlagzähkomponente und/oder mindestens einem Stabilisator compoundiert ist.

9. Verfahren zur Herstellung eines Copolymers mit Anhydridgruppen an einer Kohlenstoffkette des Copolymers nach einem der Ansprüche 1 bis 8, **dadurch gekennzeichnet, dass** Carboxylgruppen entlang der Kohlenstoffkette eines thermoplastischen Copolymers mindestens teilweise jeweils mit einer Seitengruppe einer innerhalb der Kohlenstoffkette benachbarten Monomereinheit, wobei die Seitengruppe eine Carboxylgruppe oder eine davon abgeleitete Gruppe ist, durch trockenes Erhitzen intramolekular, vorzugsweise ausschließlich intramolekular, zu den Anhydridstrukturen umgesetzt werden.

10. Verfahren nach Anspruch 9, **dadurch gekennzeichnet, dass** das Copolymer unter Entfernung von Compoundierungsmitteln wiedergewonnen wird, wobei die Wiedergewinnung folgende Schritte umfaßt:
- Herstellen einer Lösung des Copolymers in einem alkalischen Medium unter Auflösung (Öffnung) der intramolekularen Anhydridstrukturen und Salzbildung des Copolymers,
- Abtrennen des gelösten Copolymers von den nicht gelösten Compoundierungsmitteln und Verunreinigungen,
- Erniedrigen des pH-Werts der Lösung unter Ausfällung des Copolymers,
- Trockenes Erhitzen des ausgefällten Copolymers unter Rückbildung der intramolekularen Anhydridstrukturen.

11. Verwendung eines Copolymers nach einem der vorhergehenden Ansprüche 1 bis 8 zur Herstellung von Gebrauchsgegenständen, insbesondere von Geschirr.

## Claims

1. Copolymer comprising monomer units carrying carboxyl groups, in particular for the production of articles of daily use, where the carboxyl groups are present along a carbon chain of the copolymer and are linked at least partly in each case with a side group of a neighboring monomer unit within the carbon chain with formation of intramolecular anhydride structures, **characterized in that** the copolymer is a terpolymer based on methacrylic acid, n-butyl acrylate and styrene.

2. Copolymer according to Claim 1, **characterized in that** the anhydride structures are present in each case in the form of rings, preferably six-membered rings.

3. Copolymer according to Claim 1 or 2, **characterized in that** the anhydride structures are in each case a glutaric anhydride structure.

4. Copolymer according to any of the preceding claims, **characterized in that** the anhydride structures are formed in each case by reaction between the carboxyl group of a methacrylic acid unit and the ester group of an n-butyl acrylate unit.

5. Copolymer according to any of the preceding claims, **characterized in that** the proportion by weight of free carboxyl groups in the anhydrized copolymer (carboxyl content) is from 13 to 50% by weight, in particular from 13 to 25% by weight, preferably from 13 to 20% by weight.

6. Copolymer according to any of the preceding claims, **characterized in that** the copolymer has a different glass transition temperature (T_{g}), preferably a lower glass transition temperature (T_{g}), compared with before the formation of the intramolecular anhydride structures.

7. Copolymer according to any of the preceding claims, **characterized in that** the copolymer has a glass transition temperature (T_{g}) in the range from 85°C to 155°C, in particular in the range from 90°C to 150°C, where the glass transition temperature is measured with DSC.

8. Copolymer according to Claim 1, which is compounded with at least one impact-resistant component and/or at least one stabilizer.

9. Process for the preparation of a copolymer having anhydride groups on a carbon chain of the copolymer according to any of Claims 1 to 8, **characterized in that** carboxyl groups along the carbon chain of a thermoplastic copolymer are subjected to an intramolecular reaction, preferably exclusively intramolecular reaction, at least partly in each case with a side group of a neighboring monomer unit within the carbon chain, the side group being a carboxyl group or a group derived therefrom, by dry heating to give the anhydride structures.

10. Process according to Claim 9, **characterized in that** the copolymer is recovered with removal of compounding agents, the recovery comprising the following steps:
- preparation of a solution of the copolymer and an alkali medium with opening of the intramolecular anhydride structures and salt formation of the copolymer,
- separation of the dissolved copolymer from the undissolved compounding agents and impurities,
- reduction of the pH of the solution with precipitation of the copolymer,
- dry heating of the precipitated copolymer with re-formation of the intramolecular anhydride structures.

11. Use of a copolymer according to any of the preceding Claims 1 to 8 for the production of articles of daily use, in particular of crockery.

## Revendications

1. Copolymère présentant des unités monomères portant des groupes carboxyle, en particulier pour la fabrication d'ustensiles, les groupes carboxyle se trouvant le long d'une chaîne carbonée du copolymère et étant liés au moins partiellement à chaque fois à un groupe latéral d'une unité monomère adjacente au sein de la chaîne carbonée avec formation de structures intramoléculaires de type anhydride, **caractérisé en ce que** le copolymère est un terpolymère à base d'acide méthacrylique, d'acrylate de n-butyle et de styrène.

2. Copolymère selon la revendication 1, **caractérisé en ce que** les structures de type anhydride se trouvent à chaque fois sous forme de cycles, de préférence sous forme de cycles à six chaînons.

3. Copolymère selon la revendication 1 ou 2, **caractérisé en ce que** les structures de type anhydride sont à chaque fois une structure de type anhydride d'acide glutarique.

4. Copolymère selon l'une quelconque des revendications précédentes, **caractérisé en ce que** les structures de type anhydride sont à chaque fois formées par réaction entre le groupe carboxyle d'une unité d'acide méthacrylique et le groupe ester d'une unité d'acrylate de n-butyle.

5. Copolymère selon l'une quelconque des revendications précédentes, **caractérisé en ce que** la proportion pondérale de groupes carboxyle libres dans le copolymère à structures de type anhydride (teneur en carboxyle) est de 13 à 50% en poids, en particulier de 13 à 25% en poids, de préférence de 13 à 20% en poids.

6. Copolymère selon l'une quelconque des revendications précédentes, **caractérisé en ce que** le copolymère présente une autre température de transition vitreuse (T_{g}), de préférence plus basse, que celle avant la formation des structures intramoléculaires de type anhydride.

7. Copolymère selon l'une quelconque des revendications précédentes, **caractérisé en ce que** le copolymère présente une température de transition vitreuse (T_{g}) dans la plage de 85°C à 155°C, en particulier dans la plage de 90°C à 150°C, la température de transition vitreuse étant mesurée par calorimétrie différentielle à balayage (DSC).

8. Copolymère selon la revendication 1, qui est combiné avec au moins un composant de résilience et/ou au moins un stabilisant.

9. Procédé pour la préparation d'un copolymère présentant des groupes de type anhydride sur une chaîne carbonée du copolymère selon l'une quelconque des revendications 1 à 8, **caractérisé en ce que** des groupes carboxyle le long de la chaîne carbonée d'un copolymère thermoplastique sont transformés, au moins partiellement, à chaque fois avec un groupe latéral d'une unité monomère adjacente au sein de la chaîne carbonée, le groupe latéral étant un groupe carboxyle ou un groupe dérivé de celui-ci, par chauffage à sec, de manière intramoléculaire, de préférence de manière exclusivement intramoléculaire, en structures de type anhydride.

10. Procédé selon la revendication 9, **caractérisé en ce que** le copolymère est récupéré avec élimination des agents de compoundage, la récupération comprenant les étapes suivantes :
- préparation d'une solution du copolymère dans un milieu alcalin avec rupture (ouverture) des structures intramoléculaires de type anhydride et formation de sel du copolymère,
- séparation du copolymère dissous des agents de compoundage et impuretés non dissous,
- diminution du pH de la solution avec précipitation du copolymère,
- chauffage à sec du copolymère précipité avec formation en retour des structures intramoléculaires de type anhydride.

11. Utilisation d'un copolymère selon l'une quelconque des revendications précédentes 1 à 8 pour la fabrication d'ustensiles, en particulier de vaisselle.
